(19) Europäisches Patentamt

European Patent Office

Office européen des brevets

(11) **EP 1 211 414 A2**

(12) **EUROPÄISCHE PATENTANMELDUNG**

(43) Veröffentlichungstag:
   **05.06.2002 Patentblatt 2002/23**

(51) Int Cl.⁷: **F03B 1/00**, F03B 3/08, F01D 1/10

(21) Anmeldenummer: **01128087.2**

(22) Anmeldetag: **27.11.2001**

(84) Benannte Vertragsstaaten:
   **AT BE CH CY DE DK ES FI FR GB GR IE IT LI LU MC NL PT SE TR**
   Benannte Erstreckungsstaaten:
   **AL LT LV MK RO SI**

(30) Priorität: **30.11.2000 DE 10059434**
   **06.10.2001 DE 10149359**

(71) Anmelder: **Neurohr, Edward**
   **76139 Karlsruhe (DE)**

(72) Erfinder: **Neurohr, Edward**
   **76139 Karlsruhe (DE)**

(54) **Strahlenturbine**

(57)   Die Erfindung betrifft eine neuartige Wasserturbine mit senkrechter Achse, bei der zwei unabhängige Laufräder durch die aktive und reaktive Kraft von Wasserstrahlen angetrieben werden. Die Turbine ist aus Sicht der theoretischen Mechanik als offenes System konzipiert, wodurch sich eine beträchtliche Leistungssteigerung erzielen läßt.

   Das zuströmende Wasser aus der Druckleitung (3) setzt das innere Laufrad (1) mit exzentrisch angeordneten Düsen (15) in Drehbewegung. Das äußere Schaufellaufrad (4) wird durch die aktive Kraft der aus dem inneren Düsenlaufrad (1) austretenden Wasserstrahlen angetrieben. Die auf die Schaufeln (41) aufprallenden Wasserstrahlen haben eine erhöhte Geschwindigkeit, die sich als Resultierende aus ihrer Austrittsgeschwindigkeit und aus der Bahngeschwindigkeit der Düsenausläufe ergibt.

Fig. 3

EP 1 211 414 A2

## Beschreibung

### Technisches Gebiet

Die Erfindung betrifft eine neuartige Wasserturbine mit senkrechter Achse für relativ geringe Fallhöhen, bei der zwei unabhängige Laufräder durch die Kraft von Wasserstrahlen angetrieben werden. Die Turbine ist als mechanisch offenes System konzipiert, wodurch sich eine beträchtliche Leistungssteigerung erzielen läßt.

### Stand der Technik

Bei mittleren und größeren Fallhöhen ist die Francis-Turbine z.Z. die meist genutzte Maschine für die Umsetzung der Wasserkraft in elektrische Energie.

Bei geringeren Fallhöhen und bei Flußkraftwerken hingegen, werden die Kaplan-Turbine und einfachere Varianten wie Rohrturbinen eingesetzt.

All diese Überdruckturbinen, ob mit radialer oder axialer Beaufschlagung, sind aus Sicht der theoretischen Mechanik geschlossene Systeme, wodurch sie zwangsläufig den Gesetzmäßigkeiten des Energieerhaltungssatzes unterliegen. Somit sind Fallhöhe und Durchflußmenge die beiden maßgebenden Größen, die die erzielbare Leistung aus einem solchen energetischen System bestimmen.

Daher gelten alle Bestrebungen bei solchen Turbinen hauptsächlich nur der Verbesserung des hydraulischen Wirkungsgrades.

### Darstellung der Erfindung

Die Erfindung ist allgemein eine hydraulische Strömungsmaschine und insbesondere eine neuartige Turbine mit vertikalachsiger Aufstellung, die sowohl die reaktive als auch die aktive Kraft von Wasserstrahlen nutzt, um gleichzeitig zwei unabhängige Laufräder anzutreiben. Deshalb wird sie als Strahlenturbine bezeichnet.

Es wurde schon darauf hingewiesen, daß die herkömmlichen Überdruckturbinen (Francis- und Kaplan-Turbinen) geschlossene Systeme im Sinne der theoretischen Mechanik sind.

Da aber in einem geschlossenen System - aufgrund des Energieerhaltungssatzes - die maximale Leistung einer Turbine auf den Wert $P = \gamma \cdot Q \cdot h$ oder $P = \gamma \cdot Q \cdot v^2/2g$ begrenzt ist, kann eine nennenswerte Leistungssteigerung von Strömungsmaschinen nur durch das Öffnen solcher Systeme erzielt werden.

Demgemäß liegt der Erfindung die Idee zugrunde, eine neuartige Turbine als energetisch offenes System zu gestalten. Die gestellte Aufgabe wird durch den rationellen Einsatz von zwei unabhängigen Laufrädern, deren Achsen sich auf der gleichen Senkrechten befinden, gelöst.

Das innere Laufrad ist mit horizontalen, exzentrisch angeordneten und nach außen gerichteten Düsen ausgestattet. Die Fallhöhe $h$, die dieses Laufrad antreibt, ist - so wie bei einer Pelton-Turbine - durch den Abstand zwischen Oberwasserspiegel und Düsenachsen bestimmt.

Nach dem dritten Newtonschen Gesetz von Wirkung und Gegenwirkung wird das Düsenlaufrad 1 durch den Wasserdruck aus der Druckleitung 3 in Bewegung gesetzt, und die Wasserstrahlen werden entgegengerichtet - durch die Düsen 15 - nach außen geschleudert.

Somit funktioniert das innere Laufrad so wie eine herkömmliche Überdruck- oder Reaktionsturbine. Die effektive Leistung dieses geschlossenen Systems beträgt $P_1 = \eta_1 \cdot \gamma \cdot Q \cdot h$. Erfindungsgemäß wird die aktive Kraft der Wasserstrahlen - die aus diesem geschlossenen System austreten - bei der Strahlenturbine ebenfalls genutzt, um ein unabhängiges, äußeres Schaufellaufrad 4 anzutreiben. Also ist hier der Energieerhaltungssatz sowohl auf die Arbeit der reaktiven, als auch auf die der aktiven Kraft der Wasserstrahlen anzuwenden.

Das äußere Schaufellaufrad erzeugt eine zusätzliche Leistung $P_2 = \eta_2 \cdot \gamma \cdot Q \cdot v_a^2/2g$, wobei $v_a$ die Aufprallgeschwindigkeit der Wasserstrahlen auf die Schaufeln dieses Laufrades ist. Wenn an die Wellen 2 und 5 der beiden Laufräder nun Generatoren angeschlossen werden, kann die hydraulische Gesamtleistung $P_1 + P_2$ in elektrische Energie umgesetzt werden. Daraus ist ersichtlich, dass die Gestaltung einer Turbine als mechanisch offenes System den entscheidenden Vorteil bietet, eine zusätzliche Kraft - die gemäß dem dritten Newtonschen Gesetz entsteht - für eine beträchtliche Leistungssteigerung nutzbar zu machen.

Die Austrittsgeschwindigkeit der Wasserstrahlen aus den Düsen des inneren Laufrades ist abhängig von der Fallhöhe $h$, und sie beträgt: $v = \alpha \cdot (2gh)^{1/2}$.

Gleichzeitig ergibt sich durch die Drehbewegung des Laufrades, und damit der Düsenausläufe, auch eine beträchtliche Bahngeschwindigkeit $v_b$ der austretenden Wasserstrahlen.

Die resultierende Geschwindigkeit der Wasserstrahlen ist eine Vektorgröße $\vec{v}_r = \vec{v} + \vec{v}_b$, die sich aus der Strahlenaustrittsgeschwindigkeit $v$ und aus der Bahngeschwindigkeit $v_b$ der Düsenausläufe ergibt. Diese Resultierende $v_r$ - die bei der nachstehend beschriebenen Gestaltung des Düsenlaufrades wesentlich größer ist als die Austrittsgeschwindigkeit *v* - wird bei der Strahlenturbine für den Antrieb des äußeren Schaufellaufrades genutzt, wodurch sich die Leistung dieses Laufrades erhöht.

Somit hat das innere Düsenlaufrad die Funktion eines Strahlenbeschleunigers für das äußere Schaufellaufrad. Gleichzeitig führt aber die mechanische Arbeit, die das innere Laufrad für die Strahlenbeschleunigung verrichtet, zur Reduzierung der effektiven Leistung dieses Laufrades. Aufgrund dieser Erkenntnis ist auch eine vereinfachte Variante der Strahlenturbine realisierbar, bei der nur ein Generator an die Welle 5 des äußeren Schaufellaufrades angeschlossen wird.

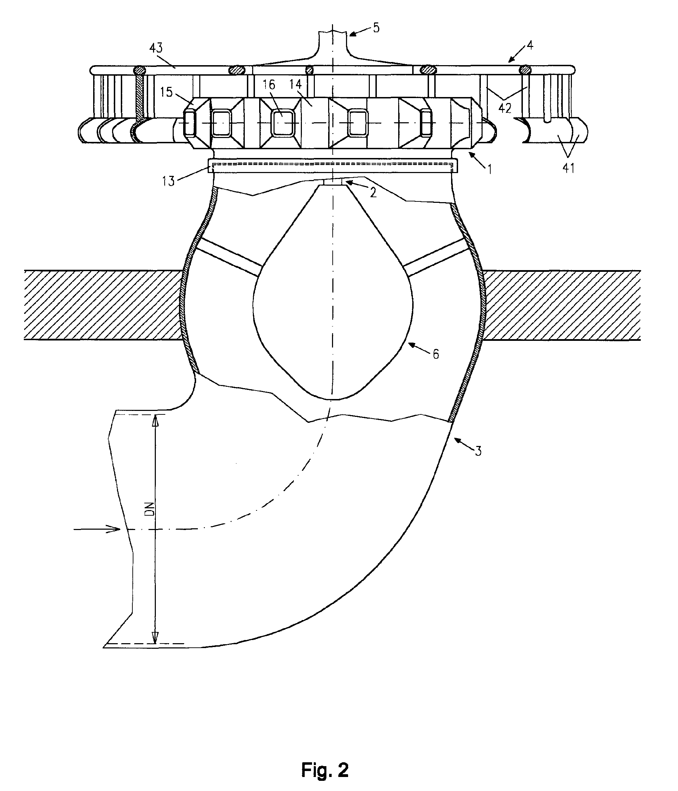

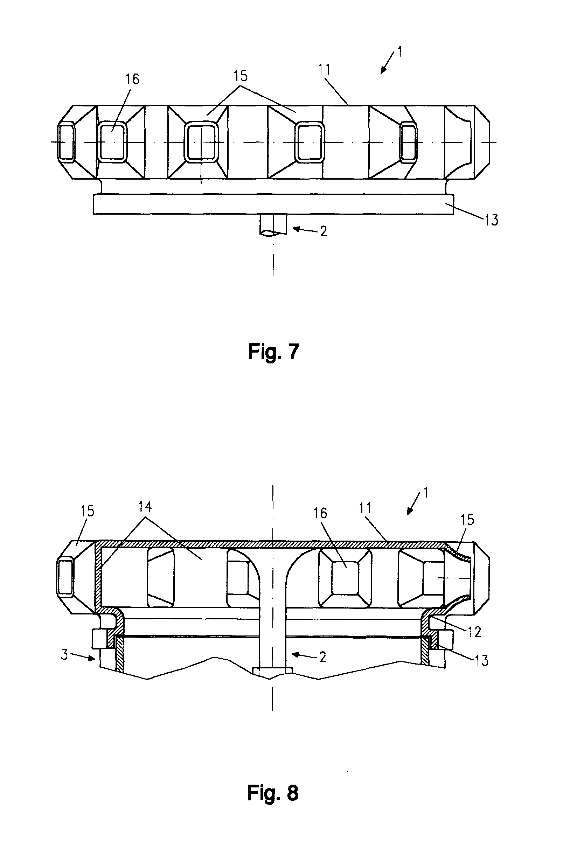

Den oberen Abschluß des Düsenlaufrades 1 (s. Fig.8) bildet der geschlossene Laufradboden 11, der mit der senkrechten Laufradwelle 2 fest verbunden ist. Um den Generator 6 - der an die Welle 2 des Düsenlaufrades 1 angeschlossen wird - in die Druckleitung 3 einzubauen, kann diese so wie bei senkrechten Rohrturbinen (Bulb) gestaltet werden (s. Fig.2).

An der Unterseite des Laufrades 1 befindet sich ein ausgerundeter Laufradkranz 12, der einen hydraulisch günstigen Übergang zwischen dem Laufrad und der Triebwasserleitung 3 mit dem Durchmesser *DN* gewährleistet. Der untere Abschluß des Laufradkranzes 12 ist als Rohrmuffe 13 ausgebildet, die die Druckleitung mit einem geringen Spiel umhüllt.

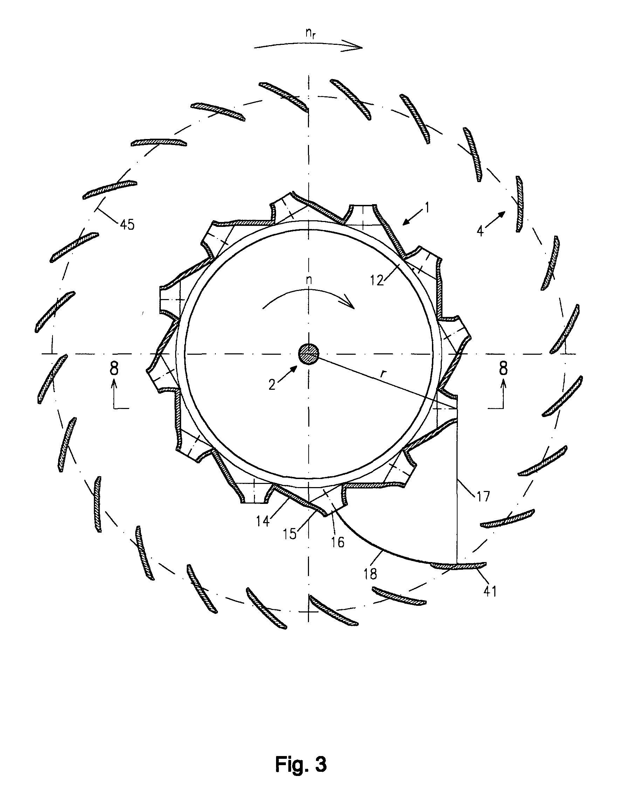

Zwischen Laufradboden und Laufradkranz ist das walzenförmige Laufrad (s. Fig. 3) mit horizontalen und nach außen gerichteten Düsen 15 ausgerüstet

Zwischen zwei benachbarten Düsen ist jeweils eine ebene Druckfläche 14 angeordnet.

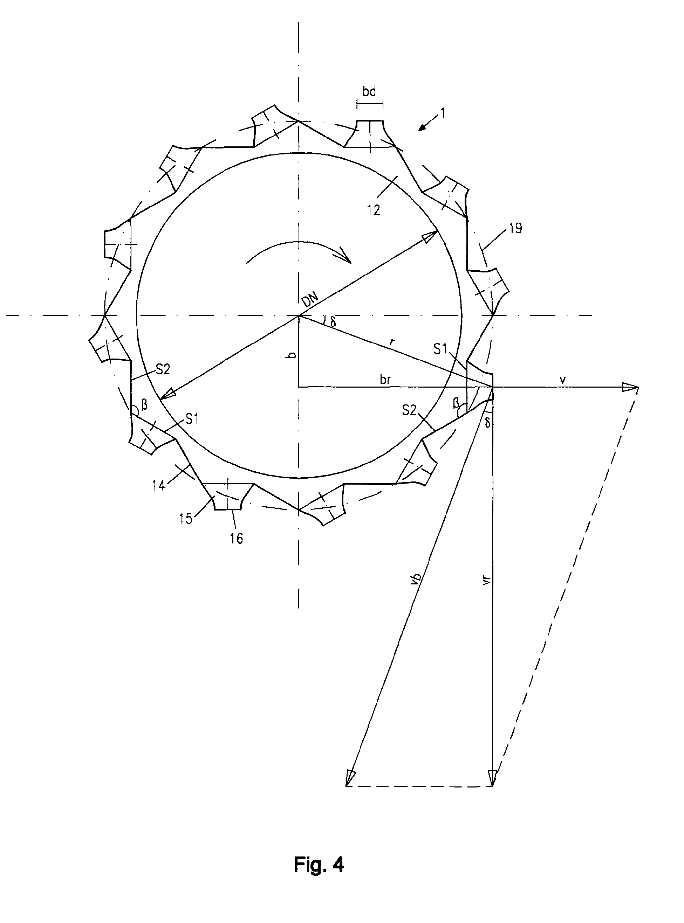

Jedes aktive Laufradelement (s. Fig. 4) besteht aus zwei gleich langen Schenkeln *S1* und *S2,* die auch den gleichen Hebelarm (*b1 = b2*) zur Laufradmitte haben. Der Schenkel *S1* bildet die Einlaufbreite einer Düse 15, und der Schenkel *S2* stellt die Länge einer Druckfläche 14 dar. Das Düsenlaufrad kann mit 12, 16, 20, 24 oder auch mit mehreren Düsen bestückt werden.

Der erforderliche Winkel $\beta$ zwischen den Schenkeln *S1* und *S2,* damit die Düsenachsen senkrecht und mittig zu einer gegenüberliegenden Druckfläche des Laufrades liegen, berechnet sich in Abhängigkeit von der Düsenzahl *nd* nach der Formel: $\beta$= 90 + 360 *l nd.*

In dem bevorzugten Ausführungsbeispiel der Erfindung, das auch in den Zeichnungen dargestellt ist, hat das Düsenlaufrad eine Anzahl von 12 Düsen, und der Winkel $\beta$ hat den berechneten Wert von 120°.

Das aus der senkrechten Druckleitung 3 von unten zuströmende Triebwasser wird in dem Laufrad 1 umgelenkt, und den horizontalen und nach außen gerichteten Düsen 15 zugeführt.

Die Druckflächen 14, die direkt gegenüber den Düsenöffnungen liegen, befinden sich ständig perpendikular zur Reaktionskraft der austretenden Wasserstrahlen. Dadurch wird das Düsenlaufrad in Drehbewegung gesetzt.

Da die Ausflußzahl $\alpha$ aus der Formel $v = \alpha \cdot (2gh)^{1/2}$ - bei hydraulisch optimierten Auslauföffnungen - sehr nahe an dem Wert 1 liegt, ist die Austrittsgeschwindigkeit der Wasserstrahlen praktisch nur von der Fallhöhe *h* abhängig.

Somit kann der Gesamtaustrittsquerschnitt $A_{ges}$ der Düsen in Abhängigkeit vom Bemessungsdurchfluß Q und der Fallhöhe *h* mit der Kontinuitätsgleichung $A_{ges}$ = Q / *v* berechnet werden.

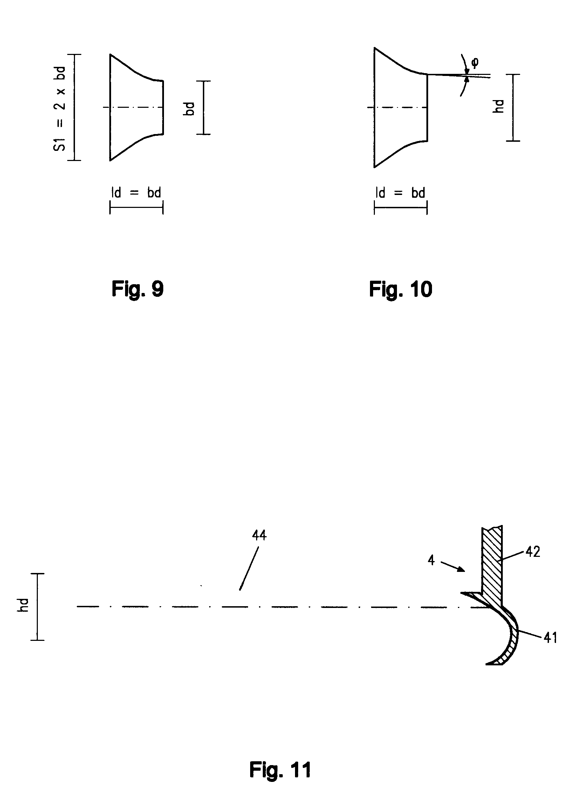

Zur hydraulisch günstigen Gestaltung der Düsen wird für die Düsenauslaufbreite *bd* die halbe Schenkellänge *S1* angenommen (s. Fig.9). Die Düsenauslaufhöhe *hd* errechnet sich aus dem erforderlichen Gesamtaustrittsquerschnitt $A_{ges}$ und der Düsenauslaufbreite *bd.*

Für die Düsenlänge *ld* wird der gleiche Wert wie für die Düsenauslaufbreite *bd* angenommen. Die theoretische Leistung des Düsenlaufrades beträgt: $P = \gamma \cdot Q \cdot h$ oder $P = \gamma \cdot Q \cdot v^2/2g.$

Die aktive Kraft, die das Düsenlaufrad in Drehbewegung versetzt, hat den Wert:

$$F = \gamma \cdot A_{ges} \cdot h \text{ oder } F = \gamma \cdot Q \cdot v/2g.$$

Das aktive Drehmoment ist somit: $M = F \cdot b$ oder $M = b \cdot \gamma \cdot Q \cdot v/2g.$

Aus der dynamischen Gleichung der Rotation $P = 2 \cdot \pi \cdot n \cdot M$ ergibt sich die theoretische Drehzahl des Düsenlaufrades: $n = P/(2 \cdot \pi \cdot M) = v/(2 \cdot \pi \cdot b).$

Die tatsächliche Drehzahl des Laufrades reduziert sich aber durch den Wirkungsgrad $\eta_1$.

Hier ist zu bemerken, dass sich das aktive Drehmoment *M* bei einem kleineren Hebelarm *b* auch verringert, so dass die reaktiven Momente eine stärkere Reduzierung des Wirkungsgrades $\eta_1$ verursachen.

Die theoretische Bahngeschwindigkeit der Düsenausläufe beträgt: $v_b = 2 \cdot \pi \cdot n \cdot r = v \cdot r/b.$

Die resultierende Strahlengeschwindigkeit hat den theoretischen Wert: $v_r = v \cdot b_r/b.$ Daraus ist ersichtlich, daß diese Resultierende von dem Verhältnis $(b_r/b)$ abhängig ist.

Eine sehr wichtige Rolle für die Größe der resultierenden Strahlengeschwindigkeit $v_r$ spielt der Hebelarm *b* der Düsenachsen zur Laufradmitte (s. Fig. 4), denn er bestimmt die Größe des Winkels $\delta$= arcsin (*b /r*), der seinerseits für das Verhältnis $v_r/v$ maßgebend ist.

Der Winkel $\delta$ muß kleiner als 45° sein, damit ein Verhältnis $v_r/v > 1$ erzielt werden kann.

Für praktische Anwendungen ist ein Winkel δ von 20° bis 35° zu empfehlen.

In Abhängigkeit von der Düsenzahl *nd* und von dem Wirkungsgrad $\eta_1$ des Düsenlaufrades ergeben sich folgende Werte für die resultierende Strahlengeschwindigkeit $v_r$:

| | | | | $v_r/v$ bei unterschiedl. Werten $\eta_1$: | | |
|---|---|---|---|---|---|---|
| Düsenzahl *nd* | Winkel β | Winkel δ | br / b | *100 %* | *80 %* | *60 %* |
| 12 | 120.0° | 20.1039° | 2.731 | 2.732 | 2.195 | 1.687 |
| 16 | 112.5° | 25.6511° | 2.082 | 2.082 | 1.678 | 1.312 |
| 20 | 108.0° | 29.1413° | 1.794 | 1.794 | 1.449 | 1.148 |

Die theoretische Richtung der Resultierenden $v_r$ ist senkrecht zu den Düsenachsen. Bei der tatsächlichen Drehzahl des Düsenlaufrades wird sich diese Richtung geringfügig verändern.

Das Schaufellaufrad 4 dreht sich um seine eigene Welle 5, die oberhalb der Düsenradachse gesondert gelagert wird, und die die hydraulische Leistung zu einem Generator überträgt.

Somit arbeitet das Schaufellaufrad wie eine eigenständige Freistrahl- oder Gleichdruckturbine, die von den Wasserstrahlen aus dem inneren Laufrad angetrieben wird.

Die Schaufeln 41 werden in gleichen Abständen so angeordnet, daß sie in der Draufsicht senkrecht zu der Flugbahn 17 der Wasserstrahlen bei rotierendem Düsenlaufrad stehen (s. Fig.6).

Dabei ist die Flugbahn der Wasserstrahlen mit der tatsächlichen Drehzahl des Düsenlaufrades zu berechnen.

Im waagerechten Schnitt haben die Schaufeln die gleiche spiralförmige Krümmung wie die Hüllkurve 18 der zurückgelegten Flugstrecken der Wasserstrahlen.

Da das äußere Laufrad 4 von den Wasserstrahlen impulsartig beaufschlagt wird, ist es zweckmäßig, daß die Anzahl der Schaufeln nicht kleiner als 24 ist.

So wie in Fig. 11 dargestellt, weisen die Schaufeln eine sehr starke Krümmung im senkrechten Schnitt auf. Die Wasserstrahlen treffen fast tangential auf den oberen Bereich der Schaufeln, und werden anschließend beinahe um 180° umgelenkt. Dadurch überträgt das Wasser - wie bei einer Pelton-Turbine - praktisch seine gesamte Energie an das Schaufellaufrad, und fließt anschließend nach unten ab.

Damit die Wasserstrahlen vor ihrem Aufprall auf die Schaufeln 41 des äußeren Laufrades gebündelt werden, weisen die Austrittswandungen der Düsen 15 im senkrechten Schnitt einen Neigungswinkel φ = 3° - 4° zur Düsenachse auf. Desweiteren ist es zweckmäßig, daß die Turbine mit einem Gehäuse ausgestattet wird.

Der generische Kreis 45 für die Konstruktion des Schaufellaufrades ist ausreichend festzulegen, damit die Rückseite der Schaufeln nicht vom Wasser berührt werden.

In Fig. 3 wurde dieser Kreis so gewählt, daß die Wasserstrahlen - nach einem Drehwinkel des Düsenlaufrades von 60° - auf die Schaufeln des äußeren Laufrades aufprallen.

Die Drehrichtung des äußeren Schaufellaufrades ist die Gleiche wie die des inneren Düsenlaufrades.

So wie aus der Beschreibung hervorgeht, kann die Strahlenturbine durch ihre erhöhte Leistung sehr wirtschaftlich - und unter Berücksichtigung von ökologischen Belangen - für die Stromerzeugung aus Wasserkraft eingesetzt werden.

**Zeichnungsliste**

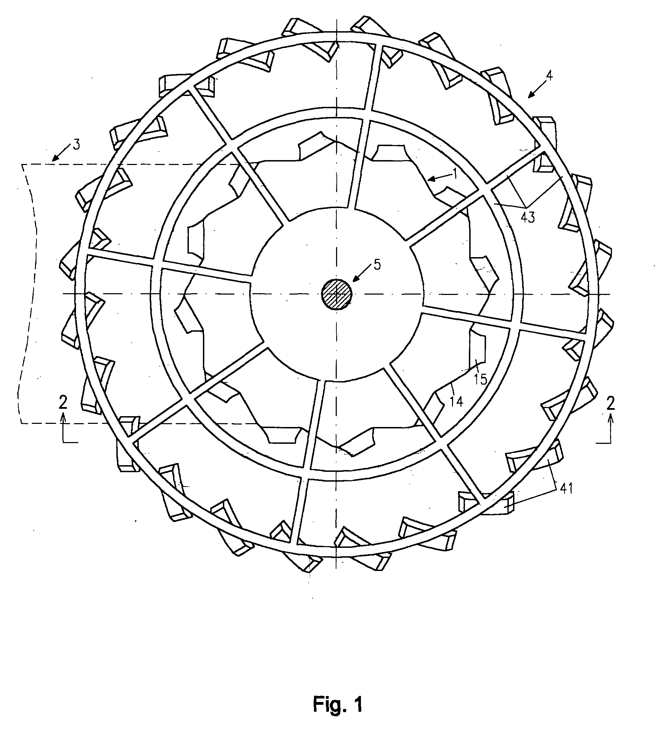

Fig.1    Draufsicht Strahlenturbine
Fig.2    Seitenansicht Turbine mit Schnitt 2 - 2 aus Fig.1 durch das Schaufellaufrad, und mit Riß durch die Druckleitung
Fig.3    Horizontalschnitt 3 - 3 aus Fig.2 durch die Turbine
Fig.4    Schematischer Horinzontalschnitt durch das Düsenlaufrad, mit Konstruktionselementen und mit den theoretischen Geschwindigkeiten der Wasserstrahlen

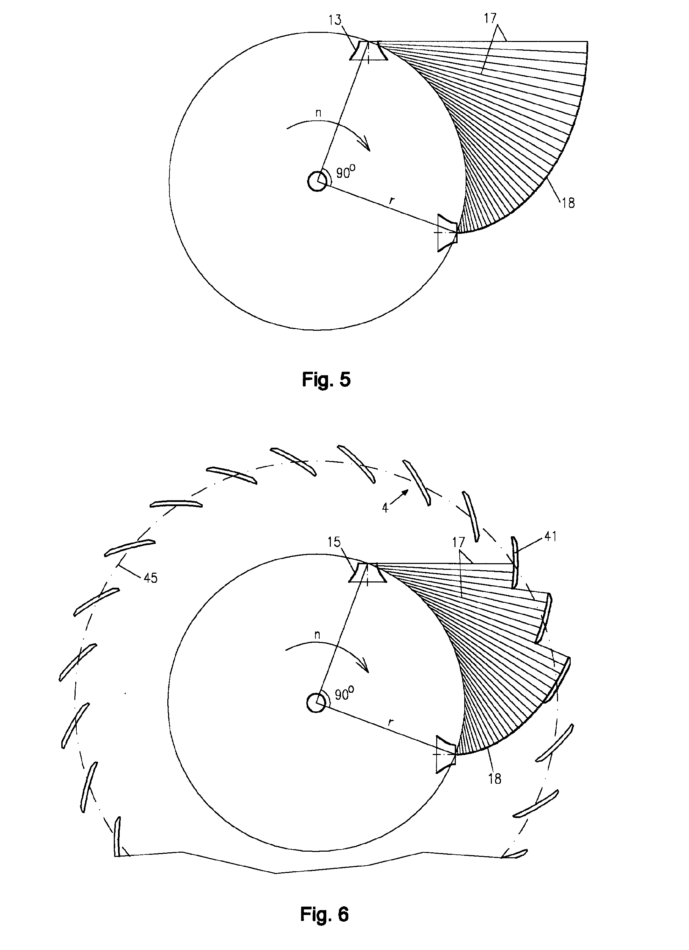

Fig.5    Flugbahn der Wasserstrahlen und spiralförmige Hüllkurve der zurückgelegten Flugstrecken bei einer Drehung des Düsenlaufrades von 90°
Fig.6    Aufprall der Wasserstrahlen aus Fig.5 auf die Schaufeln des äußeren Laufrades
Fig.7    Seitenansicht Düsenlaufrad
Fig.8    Schnitt 8 - 8 aus Fig.3 durch das Düsenlaufrad
Fig.9    horizontaler Schnitt durch eine Düse des inneren Laufrades
Fig.10    vertikaler Schnitt durch eine Düse des inneren Laufrades

Fig.11    vertikaler Schnitt durch eine Schaufel des äußeren Laufrades und durch den aufprallenden Wasserstrahl

**Bezugszeichenliste**

| | |
|---|---|
| 1 - | Düsenlaufrad |
| 11 - | Laufradboden |
| 12 - | Laufradkranz |
| 13 - | Muffe |
| 14 - | Druckfläche |
| 15 - | Düse |
| 16 - | Düsenaustrittsöffnung |
| 17 - | Flugbahn der Wasserstrahlen bei rotierendem Düsenlaufrad |
| 18 - | spiralförmige Hüllkurve der zurückgelegten Flugstrecken der Wasserstrahlen |
| 19 - | generischer Kreis für die Konstruktion des Düsenlaufrades |
| 2 - | Welle des Düsenlaufrades |
| 3 - | Druckleitung |
| 4 - | Schaufellaufrad |
| 41 - | Schaufel |
| 42 - | Schaufelhalterung |
| 43 - | Rahmen des Schaufellaufrades |
| 44 - | senkrechter Schnitt durch den auf eine Laufradschaufel aufprallenden Wasserstrahl |
| 45 - | generischer Kreis für die Konstruktion des Schaufellaufrades |
| 5 - | Welle des Schaufellaufrades, die einen Generator antreibt. |
| 6 - | Generator, angeschlossen an die Welle 2 des Düsenlaufrades |

| | |
|---|---|
| h | Fallhöhe |
| $Q$ | Bemessungsdurchfluß |
| $\gamma$ | Wichte des Wassers |
| $P$ | theoretische Leistung des Düsenlaufrades |
| $F$ | ausgeübte Drehkraft auf das Düsenlaufrad |
| $M$ | Drehmoment Düsenlaufrad |
| $n$ | Drehzahl Düsenlaufrad |
| $r$ | Radius der Düsenaustritte zur Laufradmitte |
| $nd$ | Anzahl Düsen auf dem Laufrad |
| $DN$ | Durchmesser der Druckleitung |
| $S1$ | Erster Schenkel eines Düsenelementes (Düseneinlaufbreite) |
| $S2$ | Zweiter Schenkel eines Düsenelementes (Breite der Druckfläche) |
| $\beta$ | Winkel zwischen den Schenkeln $S1$ und $S2$ des Düsenlaufrades |
| $b$ | Hebelarm von Schenkel $S1$ und von Schenkel $S2$ zur Laufradachse |
| $v$ | Austrittsgeschwindigkeit der Wasserstrahlen aus dem Düsenlaufrad |
| $\alpha$ | Ausflußzahl für die Berechnung der Austrittsgeschwindigkeit der Wasserstrahlen |
| $bd$ | Breite einer Düsenaustrittsöffnung |
| $hd$ | Höhe einer Düsenaustrittsöffnung |
| $ld$ | Düsenlänge |
| $\varphi$ | Neigungswinkel der oberen und der unteren Wandung einer Düse im Austrittsquerschnitt |
| $A_{ges}$ | Summe der Düsenaustrittsquerschnitte = $nd \cdot bd \cdot hd$ |
| $v_b$ | Bahngeschwindigkeit der Düsenaustrittsöffnungen |
| $v_r$ | Resultierende Geschwindigkeit der austretenden Wasserstrahlen |
| $n_r$ | Drehzahl Schaufellaufrad |
| $\delta$ | arcsin ($b$ /$r$) |
| $\eta_1$ | hydraulischer Wirkungsgrad des inneren Düsenlaufrades |
| $\eta_2$ | hydraulischer Wirkungsgrad des äußeren Schaufellaufrades |
| $P_1$ | tatsächliche Leistung des Düsenlaufrades |
| $P_2$ | tatsächliche Leistung des Schaufellaufrades |

**Patentansprüche**

1. Strahlenturbine, konzipiert als mechanisch offenes System, im wesentlichen bestehend aus einem inneren Laufrad (1) mit horizontalen, exzentrisch angeordneten und nach außen gerichteten Düsen (15) und mit senkrechter Welle (2), das mit dem hydraulischen Medium aus der Druckleitung (3) beaufschlagt wird, und aus einem äußeren Schaufellaufrad (4) mit eigener senkrechter Welle (5), **dadurch gekennzeichnet,**
**daß** das Drehmoment des inneren Laufrades durch die reaktive Kraft der aus den Laufraddüsen austretenden Wasserstrahlen erzeugt wird, und daß das äußere Schaufellaufrad durch die aktive Kraft dieser Wasserstrahlen angetrieben wird.

2. Strahlenturbine nach Anspruch 1, **dadurch gekennzeichnet, daß** die Wasserstrahlen - die das äußere Schaufellaufrad (4) antreiben - eine erhöhte Geschwindigkeit haben, die sich als resultierender Vektor aus der Strahlenaustrittsgeschwindigkeit aus dem inneren Laufrad (1) und der Bahngeschwindigkeit der Düsenausläufe ergibt.

3. Strahlenturbine nach den Ansprüchen 1 und 2, **dadurch gekennzeichnet, daß** sich die Achslinien der beiden Laufräder auf der gleichen Senkrechten befinden, und daß die beiden Wellen der Laufräder unabhängig voneinander sind.

4. Strahlenturbine nach den Ansprüchen 1 bis 3, **dadurch gekennzeichnet,**
**daß** das innere Düsenlaufrad (1) die austretenden Wasserstrahlen beschleunigt, und daß das äußere Schaufellaufrad (4) die resultierende Strahlengeschwindigkeit für eine erhöhte Energieerzeugung nutzt,
oder daß an die Welle (5) des äußeren Schaufellaufrades (4), sowie auch an die Welle (2) des inneren Düsenlaufrades (1), jeweils ein Generator für die Energieerzeugung angeschlossen wird.

5. Düsenlaufrad (1) nach den Ansprüchen 1 bis 4, **dadurch gekennzeichnet, daß** es mit 12, 16, 20, 24 oder mehreren Düsen bestückt ist, und daß ein Düsenelement aus jeweils zwei gleich langen Schenkeln ($S1$) und ($S2$) besteht. Dabei stellt der Schenkel ($S1$) die Breite eines Düseneinlaufes, und der Schenkel ($S2$) die Breite einer Druckfläche (14), dar.

6. Düsenlaufrad (1) nach den Ansprüchen 1 bis 5, **dadurch gekennzeichnet, daß** die Schenkeln ($S1$) und ($S2$) den gleichen Hebelarm ($b$) zur Laufradachse haben.

7. Düsenlaufrad nach den Ansprüchen 1 bis 6, **dadurch gekennzeichnet, daß** der Winkel zwischen den Schenkeln ($S1$) und ($S2$) den Wert $\beta = 90 + 360 / nd$ aufweist, wobei ($nd$) die Anzahl der Düsen darstellt. Dadurch stehen die Düsenachsen senkrecht und mittig zu einer gegenüberliegenden Druckfläche des Laufrades.

8. Düsenlaufrad nach den Ansprüchen 1 bis 7, **dadurch gekennzeichnet, daß** das Verhältnis zwischendemHebelarm($b$)einerDüsenachseunddem Abstand ($r$) zwischen Düsenäuslaufmitte und Laufradachse geringer ist als der Wert $2^{1/2}/ 2$, damit sich eine resultierende Strahlengeschwindigkeit erzielen läßt, die größer ist als die Austrittsgeschwindigkeit.

9. Düsenlaufrad nach den Ansprüchen 1 bis 8, **dadurch gekennzeichnet, daß** die Auslaufbreite ($bd$) einer Düse die Hälfte der Schenkellänge ($S1$) beträgt.

10. Düsenlaufrad nach den Ansprüchen 1 bis 9, **dadurch gekennzeichnet, daß** der untere Abschluß des Laufradkranzes (12) als Rohrmuffe (13) ausgebildet ist, die die Druckleitung (3) mit einem geringen Spiel umhüllt.

11. Düsenlaufrad nach den Ansprüchen 1 bis 10, **dadurch gekennzeichnet,**
**daß** die Austrittswandungen der Düsen (15) im senkrechten Schnitt einen Neigungswinkel von 3° - 4° zur Düsenachse aufweisen, wodurch die Wasserstrahlen vor ihrem Aufprall auf die Schaufeln (41) des äußeren Laufrades (4) gebündelt werden.

12. Schaufellaufrad (4) nach den Ansprüchen 1 bis 4, **dadurch gekennzeichnet,**
**daß** die Schaufeln (41) im waagerechten Schnitt die gleiche spiralförmige Krümmung wie die Hüllkurve (18) der zurückgelegten Flugstrecken der Wasserstrahlen aufweisen.

13. Schaufellaufrad (4) nach den Ansprüchen 1 bis 4 oder 12 **dadurch gekennzeichnet,**
**daß** die Schaufeln (41) im senkrechten Schnitt eine sehr starke Krümmung aufweisen, wodurch die Wasserstrahlen fast tangential auf den oberen Bereich der Schaufeln auftreffen und anschließend beinahe um 180° umgelenkt werden.

Fig. 1

Fig. 2

**Fig. 3**

Fig. 4

Fig. 5

Fig. 6

**Fig. 7**

**Fig. 8**

**Fig. 9**

**Fig. 10**

**Fig. 11**